(19) Europäisches Patentamt
European Patent Office
Office européen des brevets

(11) **EP 4 303 786 A1**

(12) **EUROPEAN PATENT APPLICATION**

(43) Date of publication:
**10.01.2024 Bulletin 2024/02**

(21) Application number: **23183285.8**

(22) Date of filing: **04.07.2023**

(51) International Patent Classification (IPC):
***G06Q 10/04*** (2023.01)

(52) Cooperative Patent Classification (CPC):
**G06Q 10/04;** G06Q 50/06; H02J 3/28

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.07.2022 JP 2022110550**

(71) Applicants:
• **KABUSHIKI KAISHA TOSHIBA
Minato-ku
Tokyo 105-0023 (JP)**
• **Toshiba Energy Systems & Solutions
Corporation
Saiwai-ku
Kawasaki-shi
Kanagawa (JP)**

(72) Inventors:
• **KUBOTA, Kazuto**
**Kawasaki-shi, Kanagawa (JP)**
• **TAMARU, Shingo**
**Kawasaki-shi, Kanagawa (JP)**
• **AKIBA, Takashi**
**Kawasaki-shi, Kanagawa (JP)**
• **YAMANE, Fumiyuki**
**Kawasaki-shi, Kanagawa (JP)**

(74) Representative: **Hoffmann Eitle
Patent- und Rechtsanwälte PartmbB
Arabellastraße 30
81925 München (DE)**

(54) **OPERATION PLAN PLANNING DEVICE AND OPERATION PLAN PLANNING METHOD**

(57) According to an embodiment, an operation plan planning device (100) connected to an electric power system (1) and plans an operation plan for responding to a request for a balancing power from the electric power system (1) in a hydrogen production plant (10) that includes a renewable energy generator (11), a water electrolysis device (13), and a hydrogen storage facility (14), the device (100) comprises: an input part (110); a storage (120); a calculator (130) including: a balancing power scenario creating unit (131) to create a time series of a balancing power price and a time series of a balancing power ratio, and to create a balancing power scenario by synthesizing them; a mathematical optimization calculator (134); and a calculation condition setting unit (135); and an output part (140).

FIG. 1

EP 4 303 786 A1

**Description**

FIELD

Embodiments of the present invention relate to an operation plan planning device and an operation plan planning method for a hydrogen production plant.

BACKGROUND

In hydrogen production plants, to achieve inexpensive hydrogen production, there has been a technique that plans an operation plan using a mathematical optimization technique and operates the hydrogen production plant according to the operation plan. On the other hand, with the development of a power trading market, it has become possible for the hydrogen production plants to participate in the power trading market and earn profits. Therefore, there is a possibility that hydrogen production can be achieved at a lower cost by participating in the power trading market while producing hydrogen.

There is a supply and demand balancing market in the power trading market. One of the commodities traded in this market is a commodity called balancing power. This commodity is to buy and sell the excess of power consumption of the hydrogen production plant at each time. When the trade is completed, a supervisor of an electric power system gives the hydrogen production plant side a command value within a range of contract electric power at a target time, and the hydrogen production plant side needs to make the power consumption follow the command value.

The command value from the supervisor of the electric power system is given just before the target time. Therefore, in order to plan the operation plan using the mathematical optimization technique, it is necessary to solve an optimization problem including uncertain factors that cannot be determined at the time of planning.

To address such an issue, there has been known, as an operation plan planning method targeted at generators, a method of solving mathematical optimization problems by assuming a plurality of scenarios of command values and setting constraint equations/expressions for each scenario and constraint equations/expressions across scenarios.

On the other hand, when the hydrogen production plants are targeted, there are constraints on the amount of hydrogen produced per day and the tanks that store hydrogen. For this reason, the method of planning the operation plan for such a hydrogen production plant in consideration of the balancing power has been unknown.

BRIEF DESCRIPTION OF THE DRAWINGS

FIG. 1 is a block diagram illustrating a configuration of a hydrogen production plant to which an operation plan planning device and an operation plan planning method according to a first embodiment are applied;

FIG. 2 is a graph for explaining a balancing power of the hydrogen production plant to an electric power system;

FIG. 3 is a block diagram illustrating a configuration of the operation plan planning device according to the first embodiment;

FIG. 4 is a flowchart illustrating the procedure of the operation plan planning method according to the first embodiment;

FIG. 5 is a graph illustrating a first example of contract unit price time-series data generated by a balancing power price time series creating section in the operation plan planning device according to the first embodiment;

FIG. 6 is a graph illustrating a first example of balancing power ratio time-series data generated by a balancing power ratio time series creating section in the operation plan planning device according to the first embodiment;

FIG. 7 is a table illustrating a first example of a balancing power scenario generated by a time-series data synthesizing section in the operation plan planning device according to the first embodiment;

FIG. 8 is a graph illustrating a second example of the contract unit price time-series data generated by the balancing power price time series creating section in the operation plan planning device according to the first embodiment;

FIG. 9 is a graph illustrating a hypothetical condition for generation in the balancing power ratio time series creating section in the operation plan planning device according to the first embodiment;

FIG. 10 is a first graph illustrating a second example of the balancing power ratio time-series data generated by the balancing power ratio time series creating section in the operation plan planning device according to the first embodiment;

FIG. 11 is a second graph illustrating the second example of the balancing power ratio time-series data generated by the balancing power ratio time series creating section in the operation plan planning device according to the first embodiment;

FIG. 12 is a table illustrating a second example of the balancing power scenario generated by the time-series data synthesizing section in the operation plan planning device according to the first embodiment;

FIG. 13 is a first graph illustrating an example of an operation plan generated by a mathematical optimization calculator in the operation plan planning device according to the first embodiment;

FIG. 14 is a second graph illustrating an example of the operation plan generated by the mathematical optimization calculator in the operation plan planning device according to the first embodiment;

FIG. 15 is a third graph illustrating an example of the operation plan generated by the mathematical optimization calculator in the operation plan planning device according to the first embodiment; and

FIG. 16 is a block diagram illustrating a configuration of an operation plan planning device according to a second embodiment.

DETAILED DESCRIPTION

An object of the embodiments of the present invention is to provide an operation plan planning device and an operation plan planning method for a hydrogen production plant in the case where there are constraints on the amount of produced hydrogen or hydrogen storage capacity and uncertain factors such as a command value of a balancing power are included.

According to an aspect of an embodiment, there is provided an operation plan planning device that is connected to an electric power system and plans an operation plan for responding to a request for a balancing power from the electric power system in a hydrogen production plant that includes a renewable energy generator, a water electrolysis device, and a hydrogen storage facility, the device comprising: an input part to read a constraint condition and an actual performance value; a storage to store the constraint condition and the actual performance value that are read by the input part; a calculator that includes: a balancing power scenario creating unit to create a time series of a balancing power price and a time series of a balancing power ratio, and to create a balancing power scenario by synthesizing the time series of the balancing power price and the time series of the balancing power ratio; a mathematical optimization calculator to perform an optimization calculation of the balancing power on the balancing power scenario; and a calculation condition setting unit to set a calculation condition for the optimization calculation; and an output part to output a calculation result in the calculator to the hydrogen production plant.

There will be explained an operation plan planning device and an operation plan planning method according to an embodiment of the present invention with reference to the drawings. Here, parts that are the same as or similar to each other are denoted by common reference numerals and symbols, and redundant explanations are omitted.

[First embodiment]

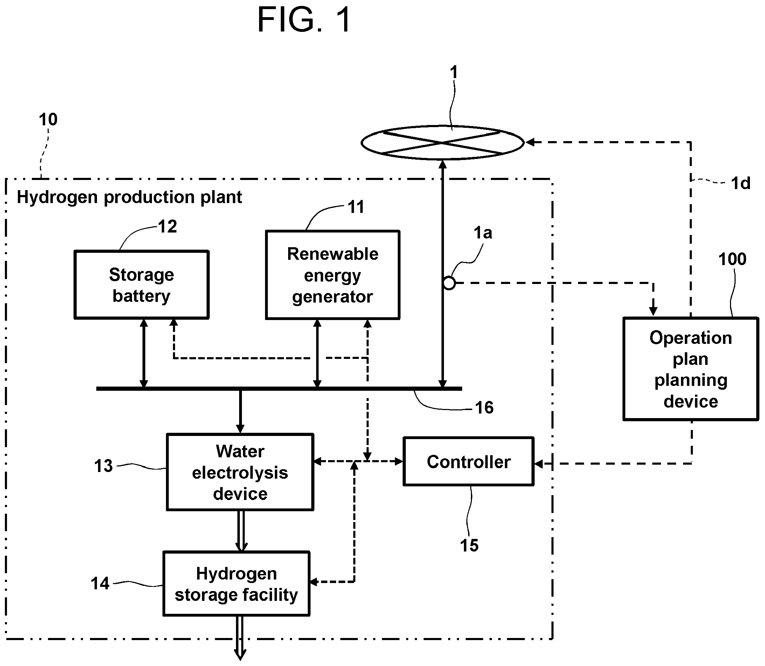

FIG. 1 is a block diagram illustrating a configuration of a hydrogen production plant 10 to which an operation plan planning device 100 and an operation plan planning method according to a first embodiment are applied.

First, there are explained the hydrogen production plant 10 to which the operation plan planning device 100 is applied and its operation.

The hydrogen production plant 10 includes: a renewable energy generator 11 such that of wind power generation and solar power generation, a storage battery 12, a water electrolysis device 13, a hydrogen storage facility 14, and a controller 15. There will be explained, as an example, the case where the hydrogen production plant 10 includes the storage battery 12 below, but the case where the hydrogen production plant 10 does not include the storage battery 12 is also applicable.

The renewable energy generator 11, the storage battery 12, and the water electrolysis device 13 are electrically connected to an in-plant bus 16 for power transfer.

The in-plant bus 16 is also electrically connected to an electric power system 1, and a transaction wattmeter 1a is provided to measure and monitor the transfer of electric power between the in-plant bus 16 and the electric power system 1. Devices for measuring the state quantity of each of the devices in the hydrogen production plant 10 are provided, but illustrations of these measuring devices are omitted.

The renewable energy generator 11 generates power based on a power generation plan that considers the electric power required for a hydrogen production plan in the water electrolysis device 13 and the electric power sales plan to the electric power system 1.

The storage battery 12 receives power from the in-plant bus 16 to be charged, and discharges power to supply the power to the in-plant bus 16.

The water electrolysis device 13 receives the power from the in-plant bus 16 and uses the power to perform electrolysis using water as a raw material, to then produce hydrogen. The hydrogen storage facility 14 receives the hydrogen produced by the water electrolysis device 13 and stores it for external supply. Moreover, if liquefaction is required, the hydrogen storage facility 14 performs liquefaction.

The controller 15 receives respective state quantities of the devices in the hydrogen production plant 10, namely, the renewable energy generator 11, the storage battery 12, the water electrolysis device 13, and the hydrogen storage facility 14, as well as a measured value of transaction electric power by the transaction wattmeter 1a, and outputs control signals to the renewable energy generator 11, the storage battery 12, the water electrolysis device 13, and the hydrogen storage facility 14.

The operation plan planning device 100 plans an operation plan for the hydrogen production plant 10 in order to participate in the power trading market, provide a balancing power, and obtain profits. That is, the operation plan planning device 100 receives from the controller 15 state quantities of the devices in the hydrogen production plant 10, a control history by the controller 15, a measured value of the transaction wattmeter 1a, and a request 1d from the electric power system 1, and performs an optimization calculation for the balancing power. The operation plan planning device 100 presents the result of the optimization calculation to the electric power system 1. Further, the operation plan planning device 100 receives a final instruction 1d from the electric power system 1 and instructs the controller 15 to perform control according to the content of the instruction.

The controller 15 controls the renewable energy generator 11, the storage battery 12, the water electrolysis device 13, and the hydrogen storage facility 14 based on the instruction from the operation plan planning device 100.

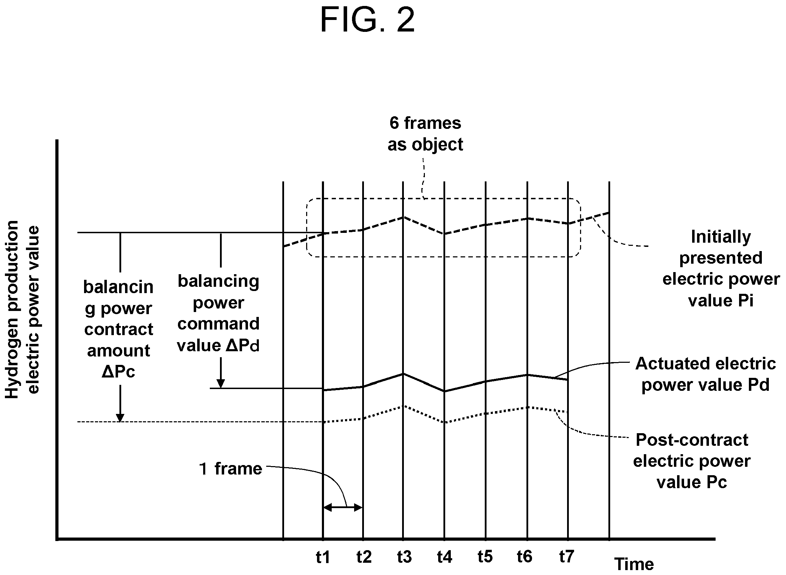

FIG. 2 is a graph for explaining the balancing power of the hydrogen production plant 10 to the electric power system 1. In FIG. 2, the horizontal axis indicates a time and the vertical axis indicates an electric power value [kW]. The electric power value on the vertical axis represents the electric power to be supplied to the water electrolysis device 13 from the in-plant bus 16 (hydrogen production electric power value) to produce a required amount of hydrogen mainly based on the hydrogen production plan. For this electric power supply, the controller 15 controls the transfer of electric power between each of the devices and the electric power system.

The balancing power trading conducted in Japan will be explained below as an example, but the embodiment is not limited to this and another type of balancing power trading may be applied.

In the balancing power trading, a time period for 6 frames is set as a unit. Here, one frame is a division unit obtained by dividing one day, that is, from 00:00 to 24:00, into 48 divisions, and the time width is 30 minutes. Therefore, the time width of 6 frames is 3 hours.

Three curves are illustrated in FIG. 2. The dashed line indicates the transition of an initially presented electric power value Pi. The dotted line indicates the transition of a post-contract electric power value Pc. Further, the solid line indicates the transition of an activation electric power value Pd.

The initially presented electric power value Pi is a planned value of the electric power to be supplied to the water electrolysis device 13 in the hydrogen production plant 10, which was presented to the supervisor side of the electric power system 1 as a plan on the hydrogen production plant 10 side prior to the adjustment of a balancing power contract.

A balancing power contract amount $\Delta Pc$ is, for example, a contract value of the balancing power determined in a manner that a request for the balancing power from the supervisor side of the electric power system 1 to the hydrogen production plant 10 side (request for supply) is made on the previous day, and based on this request, adjustment, direct negotiation, or the like is conducted in the balancing power market. As a result of routinization, there is sometimes a case where the form of a single request and a response thereto is not employed, and the above includes this case as well. Here, the balancing power contract amount $\Delta Pc$ is generally a constant value during the target six-frame time period.

The post-contract electric power value Pc is an electric power value obtained by subtracting the balancing power contract amount $\Delta Pc$ from the initially presented electric power value Pi. Therefore, the curve of the transition of the post-contract electric power value Pc is the curve indicating the remaining electric power value after the electric power for the contract amount $\Delta Pc$ is supplied, and is the curve obtained by lowering the curve of the transition of the initially presented electric power value Pi by the contract amount $\Delta Pc$.

A balancing power command value $\Delta Pd$ is a final command value of balancing power issued by the supervisor side of the electric power system 1, for example, one hour ago. It corresponds to a signal 1d in FIG. 1. This final command value is set to a value within the range of values of the contract amount $\Delta Pc$. FIG. 2 illustrates, as an example, the case where the same balancing power command value $\Delta Pd$ is used from a time t1 to a time t7, but the balancing power command value $\Delta Pd$ may differ at each time.

The activation electric power value Pd is an electric power value obtained by subtracting the balancing power command value $\Delta Pd$ from the initially presented electric power value Pi. Therefore, the curve of the transition of the activation electric power value Pd is the curve indicating the remaining electric power after the electric power for the balancing power command value $\Delta Pd$ is supplied, and is the curve obtained by lowering the curve of the transition of the initially presented electric power value Pi by the balancing power command value $\Delta Pd$.

The hydrogen production plant 10 needs to strictly observe the final balancing power command value $\Delta Pd$ with an accuracy of $\pm 10\%$, for example. For this reason, the electric power value after receiving the balancing power command value $\Delta Pd$ is expressed as the activation electric power value Pd in FIG. 2 because it is the value that is actuated in response to the command.

As described above, the controller 15 receives this final balancing power command value $\Delta Pd$ from the operation plan planning device 100 and controls each of the devices in the hydrogen production plant 10.

Here, the ratio of the balancing power command value ΔPd to the balancing power contract amount ΔPc is set to be referred to as a balancing power ratio R. As the balancing power ratio R, a value of 0 or more and 1 or less (0% or more and 100% or less) is applied.

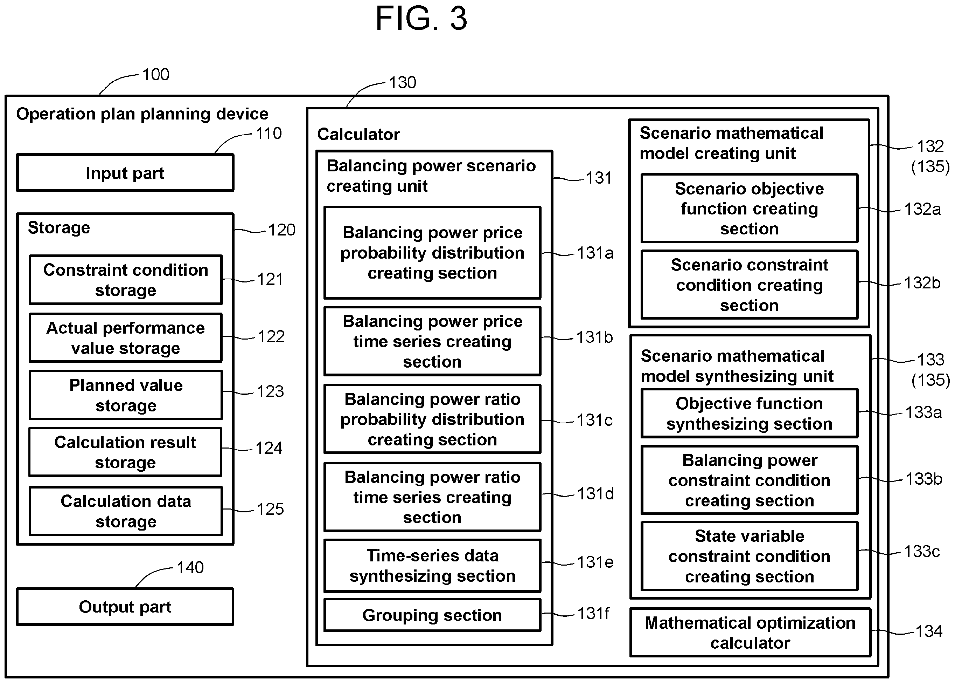

FIG. 3 is a block diagram illustrating a configuration of the operation plan planning device 100 according to the first embodiment.

The operation plan planning device 100 is to plan an operation plan including the initially presented electric power value Pi and the balancing power contract amount ΔPc with respect to the supply of the balancing power illustrated in FIG. 2.

The operation plan planning device 100 includes an input part 110, a storage 120, a calculator 130, and an output part 140. The operation plan planning device 100 may be, for example, a computer system or a collection of individual devices.

The input part 110 receives the state quantity of each of the devices in the hydrogen production plant 10 from the controller 15, the control history by the controller 15, the measured value of the transaction wattmeter 1a (FIG. 1), and the requested value and the command value ΔPd relating to the balancing power from the electric power system 1, as well as information on the specifications or the like of each of the devices in the hydrogen production plant 10 as other external inputs, constraint conditions, and information on objective functions for optimization calculation.

The storage 120 includes a constraint condition storage 121, an actual performance value storage 122, a planned value storage 123, a calculation result storage 124, and a calculation data storage 125.

The constraint condition storage 121 and the actual performance value storage 122 each store each piece of the information received by the input part 110. Further, the calculation data storage 125 also stores the information received by the input part 110 regarding calculation data.

The planned value storage 123 and the calculation result storage 124 store plans and calculation results in the operation plan planning device 100.

The calculator 130 includes a balancing power scenario creating unit 131, a scenario mathematical model creating unit 132, a scenario mathematical model synthesizing unit 133, and a mathematical optimization calculator 134. The scenario mathematical model creating unit 132 and the scenario mathematical model synthesizing unit 133 are collectively referred to as a calculation condition setting unit 135.

The balancing power scenario creating unit 131 sets a scenario to be subjected to an optimization calculation. The balancing power scenario creating unit 131 includes a balancing power price probability distribution creating section 131a, a balancing power price time series creating section 131b, a balancing power ratio probability distribution creating section 131c, a balancing power ratio time series creating section 131d, a time-series data synthesizing section 131e, and a grouping section 13 1f.

The balancing power price probability distribution creating section 131a calculates the probability distribution of a kW contract price of the balancing power from a balancing power transaction history. The probability distribution may simply be that the average value of the kW contract price regardless of a time period occurs with a probability of 1, or conditional probabilities for each hour, day of the week, and weather may be set.

The balancing power price time series creating section 131b creates contract unit price time-series data for an operation plan period using this balancing power price probability distribution.

The balancing power ratio probability distribution creating section 131c calculates the probability distribution of the balancing power ratio R. For example, in the case where the contract amount is 1000 kW, if the balancing power command value ΔPd is 0 kW, the balancing power ratio R is 0%, and if the balancing power command value ΔPd is 1000 kW, the balancing power ratio R is 100%. The balancing power ratio probability distribution may simply be that the average value of the balancing power ratio R occurs with a probability of 1, or a joint probability distribution with the contract unit price may be assumed. Further, conditional probabilities for each hour, day of the week, and weather may be set.

The balancing power ratio time series creating section 131d creates balancing power ratio time-series data for an operation plan period using this balancing power ratio probability distribution.

The time-series data synthesizing section 131e combines the contract unit price time-series data and the balancing power ratio time-series data to create balancing power scenario data that give a probability for each combination.

The grouping section 131f assigns a group mentioned previously to each scenario.

The scenario mathematical model creating unit 132 creates a model necessary for the condition of the optimization calculation. The scenario mathematical model creating unit 132 includes a scenario objective function creating section 132a and a scenario constraint condition creating section 132b.

The scenario mathematical model synthesizing unit 133 sets conditions for the mathematical optimization calculator 134 to perform an optimization calculation. The scenario mathematical model synthesizing unit 133 includes an objective function synthesizing section 133a, a balancing power constraint condition creating section 133b, and a state variable constraint condition creating section 133c.

The output part 140 displays calculation results, and the like, and at the same time, outputs command signals to the controller 15.

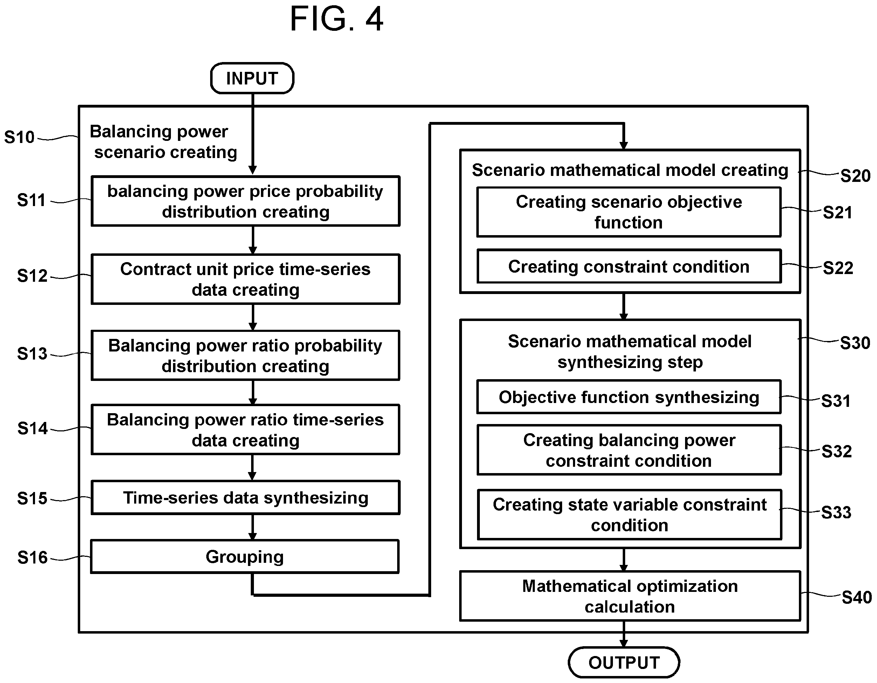

FIG. 4 is a flowchart illustrating the procedure of the operation plan planning method according to the first embodiment.

The operation plan planning method includes the following steps largely: a balancing power scenario creating step S10 executed by the balancing power scenario creating unit 131, a scenario mathematical model creating step S20 and a scenario mathematical model synthesizing step S30 that are executed by the scenario mathematical model creating unit 132, and a mathematical optimization calculation step S40 executed by the mathematical optimization calculator 134.

Further, the balancing power scenario creating step S10 includes the following steps: a balancing power price probability distribution creating step S11, a contract unit price time-series data creating step S12, a balancing power ratio probability distribution creating step S13, a balancing power ratio time-series data creating step S14, a time-series data synthesizing step S15, and a grouping step S16.

The operation of this embodiment will be explained below along with the procedure illustrated in the flowchart of FIG. 4. At the balancing power scenario creating step S10, there is explained an example of creating and synthesizing two scenarios.

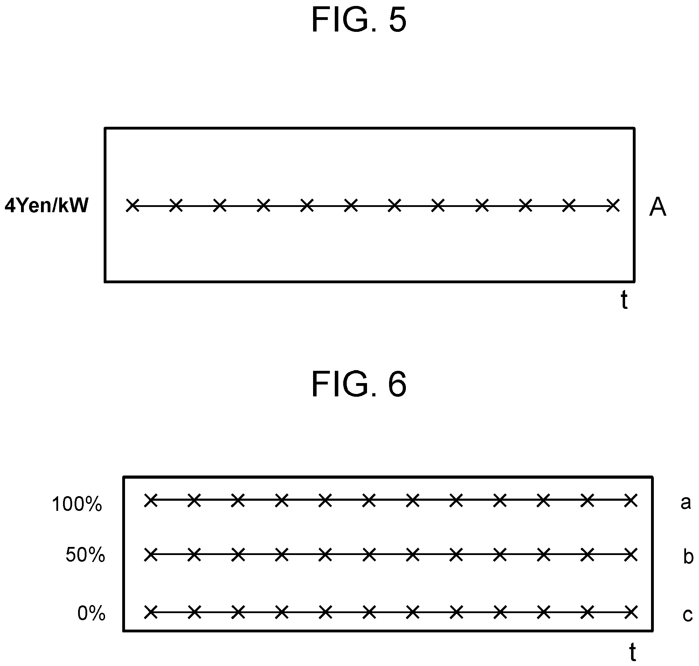

FIG. 5 is a graph illustrating a first example of the contract unit price time-series data generated by the balancing power price time series creating section 131b in the operation plan planning device 100 according to the first embodiment.

First, at Step S11, the balancing power price probability distribution creating section 131a sets and calculates the probability distribution of the kW contract price of the balancing power based on the balancing power transaction history up to that point. As the balancing power price probability distribution, for example, a normal distribution may be selected and an average value and a standard deviation may be set. Alternatively, the average value of the kW contract price may simply occur with a probability of 1. Alternatively, conditional probabilities for each hour, day of the week, and weather may be set.

Then, at Step S12, the balancing power price time series creating section 131b creates contract unit price time-series data for an operation plan period using the probability distribution set at Step S11. Here, the operation plan period is, for example, the period of six targeted frames illustrated in FIG. 2, but may be a longer or shorter period.

FIG. 5 illustrates contract unit price time-series data "A" obtained as above. FIG. 5 illustrates, as an example, the case where the average value of the kW contract price is 4 yen/kW, regardless of the period, and this occurs with a probability of 1.

FIG. 6 is a graph illustrating a first example of the balancing power ratio time-series data generated by the balancing power ratio time series creating section 131d in the operation plan planning device 100 according to the first embodiment.

First, at Step S13, the balancing power ratio probability distribution creating section 131c sets and calculates the probability distribution of the balancing power ratio R based on the balancing power transaction history up to that point. As the balancing power ratio probability distribution, for example, a normal distribution may be selected and an average value and a standard deviation may be set. Alternatively, the average value of the balancing power ratio R may simply occur with a probability of 1. Alternatively, conditional probabilities for each hour, day of the week, and weather may be set.

Then, at Step S14, the balancing power ratio time series creating section 131d creates balancing power ratio time-series data for an operation plan period using the probability distribution set at Step S13.

FIG. 6 illustrates the balancing power ratio time-series data obtained as above. Here, there are explained, as an example, balancing power ratio time-series data "b" in which the balancing power ratio R becomes 50% in the case of the contract unit price time-series data illustrated in FIG. 5. Further, when setting the balancing power ratio time series, balancing power ratio time-series data "c" in which the balancing power ratio is always 0% and balancing power ratio time-series data "a" in which the balancing power ratio is always 100% are added. Here, the probability of the balancing power ratio time-series data "a" and the balancing power ratio time-series data "c" may be 0, or may be a value that is greater than 0 and equal to or less than 1.

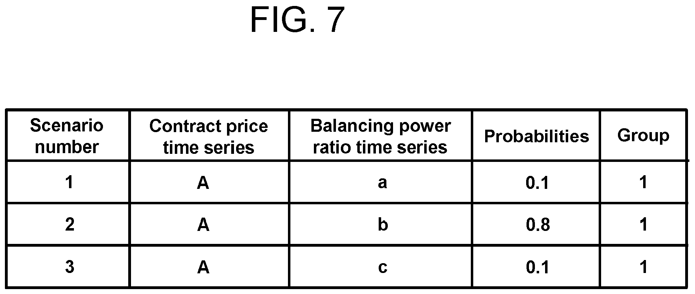

FIG. 7 is a table illustrating a first example of the balancing power scenario generated by the time-series data synthesizing section 131e in the operation plan planning device 100 according to the first embodiment.

At Step S15, the time-series data synthesizing section 131e creates scenarios by combining and synthesizing the contract unit price time-series data A obtained at Step S12 and the balancing power ratio time-series data "a" to "c" obtained at Step S15. FIG. 7 illustrates this result.

In the table illustrated in FIG. 7, each row indicates a scenario number.

Regarding each of the columns, the second column is the contract price time series, and in this case, only the contract unit price time-series data A are illustrated. The third column is the balancing power ratio time series, and in this case, the balancing power ratio time-series data "a" to "c" are illustrated. The fourth column is the occurrence probability, with probabilities of 0.1, 0.8, and 0.1 assigned to respective combinations.

The above is the first scenario. Then, the second scenario is explained.

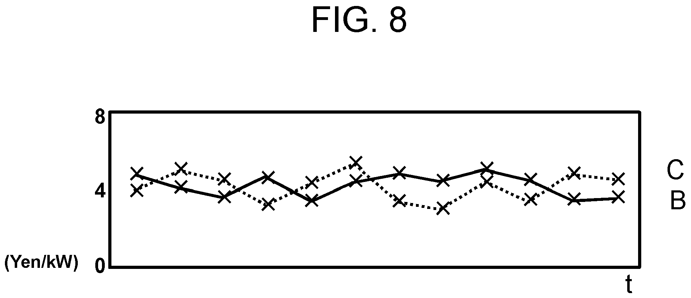

FIG. 8 is a graph illustrating a second example of the contract unit price time-series data generated by the balancing power price time series creating section 131b in the operation plan planning device 100 according to the first embodiment.

First, at Step S 11, the balancing power price probability distribution creating section 131a sets and calculates the probability distribution of the kW contract price of the balancing power.

Then, at Step S12, the balancing power price time series creating section 131b creates contract unit price time-series data for an operation plan period using the balancing power price probability distribution set at Step S11.

FIG. 8 illustrates the case where the probability distribution, which is assumed to follow a normal distribution with an average of 4 yen and a standard deviation of 1 yen, is set from sampling results and a time series of the contract unit price at each time is generated based on this distribution. Here, two series B and C of contract unit price time-series data are obtained, and at this time, the occurrence probability of 0.5 is given to each of the two series, assuming that the two series have the same occurrence probability.

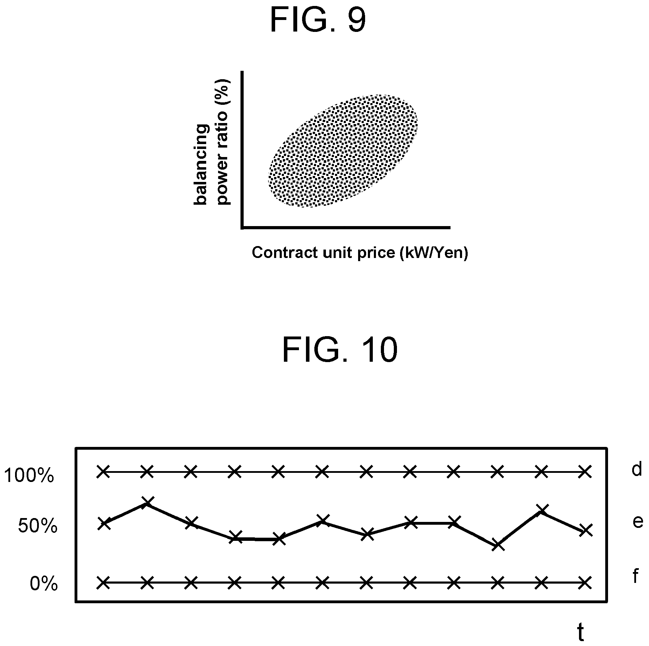

FIG. 9 is a graph illustrating assumed conditions for generation in the balancing power ratio time series creating section 131d in the operation plan planning device 100 according to the first embodiment.

FIG. 9 is an example of a joint probability distribution in the case of assuming that there is a correlation between the contract unit price and the balancing power ratio. In FIG. 9, the horizontal axis indicates the contract unit price [kW/yen] and the vertical axis indicates the balancing power ratio R [%]. FIG. 9 illustrates the case where there is a positive correlation between the two. The balancing power ratio probability distribution creating section 131c contains the above correlation data.

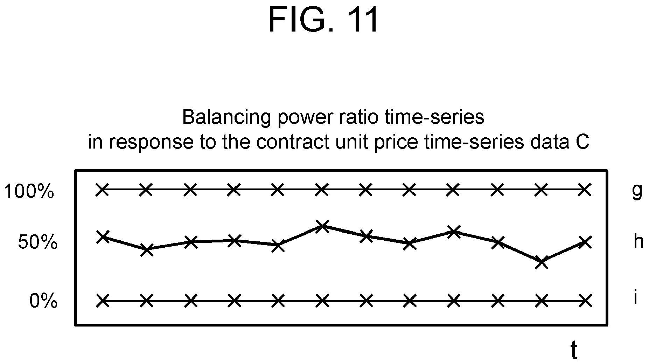

FIG. 10 is a first graph illustrating a second example of the balancing power ratio time-series data generated by the balancing power ratio time series creating section 131d in the operation plan planning device 100 according to the first embodiment. Further, FIG. 11 is a second graph illustrating the second example of the balancing power ratio time-series data generated by the balancing power ratio time series creating section 131d in the operation plan planning device 100 according to the first embodiment.

First, at Step S13, the balancing power ratio probability distribution creating section 131c sets and calculates the probability distribution of the balancing power ratio R using the correlation data.

Then, at Step S14, the balancing power ratio time series creating section 131d creates balancing power ratio time-series data for an operation plan period using the balancing power ratio probability distribution set at Step S13.

FIG. 10 and FIG. 11 illustrate the balancing power ratio time-series data created at Step S14. FIG. 10 illustrates balancing power ratio time-series data "d", "e", and "f" in response to the contract unit price time-series data B. Further, FIG. 11 illustrates balancing power ratio time-series data "g", "h", and "i" in response to the contract unit price time-series data C.

Similarly to the first example, to the balancing power ratio time-series data, the time series with the balancing power ratio illustrated with "f" in FIG. 10 and the balancing power ratio illustrated with "I" in FIG. 11 being always 0% and the time series with the balancing power ratio illustrated with "d" in FIG. 10 and the balancing power ratio illustrated with "g" in FIG. 11 being always 100% are added. Here, the balancing power ratio time-series data to which the same contract unit price time-series data belong are called a group. Here, each of {d, e, f} and {g, h, i} corresponds to a group.

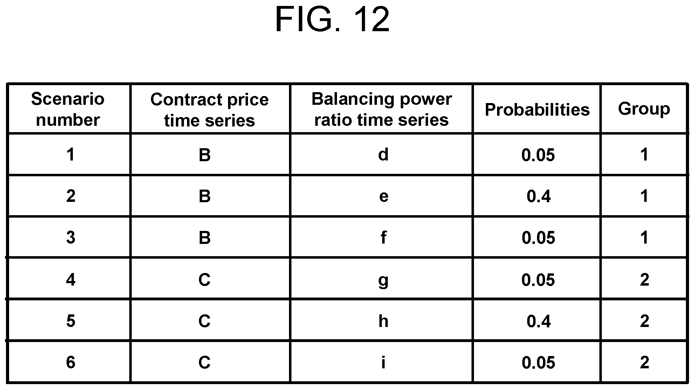

FIG. 12 is a table illustrating a second example of the balancing power scenario generated by the time-series data synthesizing section 131e in the operation plan planning device 100 according to the first embodiment.

At Step S15, the time-series data synthesizing section 131e creates scenarios by combining and synthesizing the contract unit price time-series data B and C obtained at Step S12 and the balancing power ratio time-series data "d" to "i obtained at Step S15. FIG. 12 illustrates this result.

As illustrated in FIG. 12, the grouping section 131f groups the scenarios into Group 1 and Group 2. In FIG. 12, the sum of the occurrence probabilities in each of the two groups is 0.5. In the table, there is explained an example where the average occurrence probability is 0.4 and in the case of the balancing power ratio R being 0% and 100%, the average occurrence probability is 0.05.

The above is the procedure and the example of the balancing power scenario creating step (Step S10).

Next, there is explained the scenario mathematical model creating step S20. The scenario mathematical model creating unit 132 creates a mathematical optimization model for each scenario. Specifically, the scenario objective function creating section 132a creates a scenario objective function (Step S21), and the scenario constraint condition creating section 132b creates a constraint condition (Step S22).

The following explains the scenario objective function creation at Step S21 and the scenario constraint condition creation at Step S22.

The constants and variables necessary for the condition creation and the optimization calculation are as follows.

(Constants)

T: a set of calculation target times t, where t refers to the order number of frames obtained by dividing the 24 hours of a day into 30-minute intervals from 00:00, that is, a frame number.

D: a set of calculation target days d
a: a constant for converting kW to 30 minutes kWh
C_ELCOST (t, s): a purchased electric power cost
C_H2OUT (d, s): an amount of shipped hydrogen
C_ECGAS_EF: efficiency of the water electrolysis device 13 ($Nm^3/kWh$)
C_ECEL_LL: a lower limit electric power (kW) of the water electrolysis device 13
C_ECEL_UL: an upper limit electric power (kW) of the water electrolysis device 13
C_H2ST_LL: a storage lower limit capacity of hydrogen storage facility ($Nm^3$)
C_H2ST_UL: a storage upper limit capacity of hydrogen storage facility ($Nm^3$)

(Optimization variables (where the lower limit is 0 and the upper limit is ∞))

Optimization variables are explained below. Here, the optimization variables mean the state variables of the hydrogen production plant 10 that are subject to the optimization calculation.

X_ECEL (t, s): a power consumption (kW) of the water electrolysis device 13
X_ECH2 (t, s): an amount of produced hydrogen ($Nm^3$) of the water electrolysis device 13
X_H2ST (t, s): a storage amount of hydrogen storage facility ($Nm^3$)
X_H2OUT (t, s): an amount of shipped hydrogen ($Nm^3$)
X_H2OUT_DCUMSUM (t, s): a cumulative hydrogen shipped amount on the day ($Nm^3$), which is used when synthesizing the scenario mathematical model.

(Objective function)

An example of a scenario objective function OBJ (s) created by the scenario objective function creating section 132a at Step S21 is expressed in the following equation (1). Here, "t" means the time included in the calculation target day "d". In this example, the scenario objective function OBJ (s) is the value obtained by subtracting the income by the balancing power from the cost of electric power purchased from the electric power system 1. As will be described later, the mathematical optimization calculator 134 calculates the transition of state variables by an optimization calculation that minimizes this scenario objective function OBJ (s).

$$OBJ(s) = \sum_{t \in T} [X\_ECEL(t, s) \times C\_ELCOST(t, s)$$
$$- X\_DR\_VOL(t, s) \times C\_DR\_PRICE(t, s)]$$

$$(1)$$

(Constraint conditions)

The constraint conditions on the relationship between the power consumption X_ECEL (t, s) of the water electrolysis device 13 and the amount of produced hydrogen X_ECH2 (t, s) are expressed in the following equation and expressions (2) to (4). In these constraint equation and expressions for the water electrolysis device 13, the relationship between the input electric power of the water electrolysis device 13 and the amount of produced hydrogen, and the upper and lower limits of the power consumption of the water electrolysis device 13, that is, the electric power to the water electrolysis device 13 are the constraint conditions.

$$X\_ECH2(t, s)$$
$$= X\_ECEL(t, s) \times C\_ECGAS\_EF \times a \quad ...(2)$$
$$X\_ECEL(t, s) \geq C\_ECEL\_LL \quad ...(3)$$

$$X\_ECEL\,(t,\,s) \le C\_ECEL\_UL \qquad ...(4)$$

The constraint conditions on the balance of the hydrogen storage facility 14 are expressed in the following equation and expressions (5) to (7). In the constraint equation of the storage amount of hydrogen storage facility (Nm$^3$) X_H2ST (t, s) of the hydrogen storage facility 14, the balance of the remaining amount H2_ST (t-1, s) of the hydrogen storage facility 14, the amount of produced hydrogen X_ECH2 (t, s), and the amount of shipped hydrogen X_H2OUT (t, s), and the upper and lower limits of the hydrogen storage facility 14 are the constraint conditions.

$$X\_H2ST\,(t,\,s)$$

$$= H2\_ST\,(t\text{-}1,\,s)$$

$$+ X\_ECH2\,(t,\,s) \text{-} X\_H2OUT\,(t,\,s) \;...(5)$$

$$X\_H2ST\,(t,\,s) \ge C\_H2ST\_LL \qquad ...(6)$$

$$X\_H2ST\,(t,\,s) \le C\_H2ST\_UL \qquad ...(7)$$

Further, the constraint on the amount of shipped hydrogen X_H2OUT (t, s) from the hydrogen storage facility 14 is expressed in the following expression (8).

$$\sum_{t \in d} X\_H2OUT(t,\,s) \geqq C\_H2OUT(d,\,s)$$

$$...(8)$$

Then, at the scenario mathematical model synthesizing step S30, objective function synthesis by the objective function synthesizing section 133a (Step S31), balancing power constraint condition creation by the balancing power constraint condition creating section 133b (Step S32), and state variable constraint condition creation by the state variable constraint condition creating section 133c (Step S33) are performed.

The following are constants to be used at the scenario mathematical model synthesizing step S30.

p (s): an occurrence probability of a scenario s
C_DR_PRICE (t, s): a balancing power unit price
C_DR_PROP (t, s): a balancing power ratio

Further, the following are optimization variables.

Y_DR (t, s): 0/1 variable, where 0: the balancing power is received and 1: the balancing power is not received.
X_DR_VOL (t, s): a balancing power contract amount [kW], where the lower limit is 0 and the upper limit is ∞.

Here, Y_DR (t, s) and X_DR_VOL (t, s) are assumed to have the same value regardless of the scenario. Further, in order to set the upper limit of X_DR_VOL (t, s), the following constraint expression (9) is set for the time "t" belonging to T and the scenario "s" belonging to S.

$$X\_DR\_VOL\,(t,\,s) \le C\_ECEL\_UL \quad ...(9)$$

The synthesis of the objective function OBJ is performed by finding an expected value of the scenario mathematical model as expressed in the following equation (10).

$$OBJ = \sum_{s \in S} p(s) \times OBJ(s)$$

$$...(10)$$

Next, the constraint equation between scenarios is expressed in the following equation (11). In the constraint equation regarding the balancing power, it is assumed that the power consumption of the water electrolysis device 13 is a system received power amount and that supply and demand balancing is made for the system received power amount.

$$\text{if } Y\_DR\,(t, s)=1:$$

$$X\_ECEL\,(t, s) = X\_ECEL\,(t, s0\,(s))$$

$$+ C\_DR\_PROP\,(t, s) \times X\_DR\_VOL\,(t, s)$$

$$...(11)$$

Here, s0 (s) represents the scenario in which the balancing power ratios are all 0 in the previously-described group to which the scenario s belongs. Therefore, this constraint equation (11) will represent a constraint where s0 (s) is a baseline scenario, and at the time "t" in the scenario "s", the value obtained by adding the baseline to the value obtained by multiplying the balancing power contract amount by the balancing power ratio is the system received electric power that should be followed. Further, in formulation in the mathematical optimization, conditional constraint equations/expressions can be described using the BIG_M method.

Then, constraints are set between variables that make the states of the hydrogen production plants 10 match between scenarios. In this example, variables related to storage and shipment amounts, such as the amount of shipped hydrogen X_H2OUT (t, s) of the hydrogen storage facility 14 and the cumulative hydrogen shipped amount on the day X_H2OUT_DCUMSUM (t, s), are targeted. Further, when the storage battery 12 is installed in the hydrogen production plant 10, the SOC is a target variable. The constraint equation (12) is described below.

$$\text{if } Y\_DR\,(t, s) = 0 \text{ and } Y\_DR\,(t+1, s) = 1:$$

$$X\_H2ST\,(t, s) = X\_H2ST\,(t, s0\,(s))$$

$$X\_H2OUT\_DCUMSUM\,(t, s)$$

$$= X\_H2OUT\_DCUMSUM\,(t, s0\,(s)) \quad ...(12)$$

Here, when the time "t" is not the time at which the balancing power is received, but the time t+1 is the time at which the balancing power is received, a constraint is set to match the storage amount of the hydrogen storage facility 14 at the time t with the cumulative hydrogen shipped amount on the day in the scenario of the group.

As above, after performing the scenario mathematical model creating step S20 and the scenario mathematical model synthesizing step S30, the mathematical optimization calculator 134 performs a mathematical optimization calculation (Step S40).

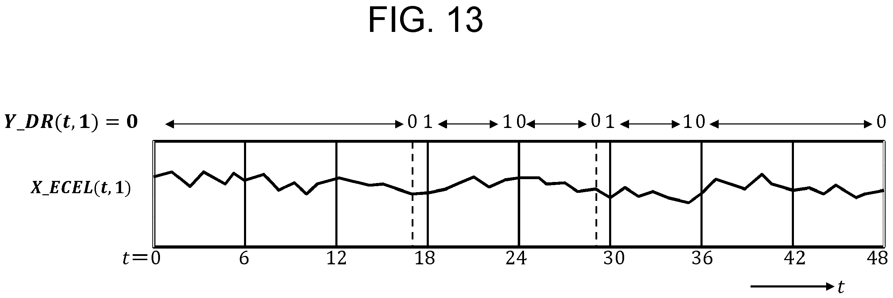

FIG. 13, FIG. 14, and FIG. 15 are first to third graphs illustrating examples of the operation plan generated by the mathematical optimization calculator 134 in the operation plan planning device 100 according to the first embodiment.

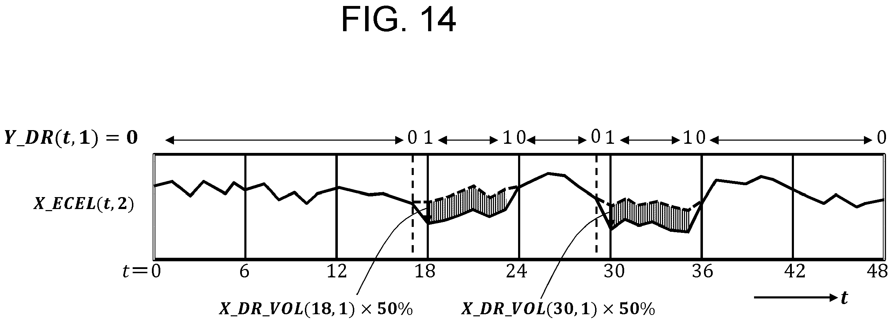

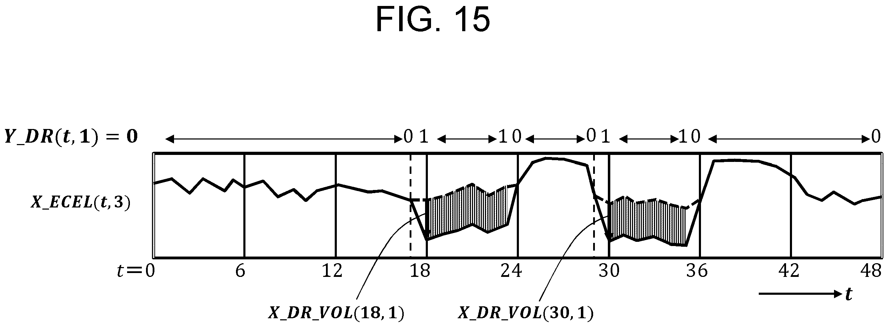

In FIG. 13, FIG. 14, and FIG. 15, a horizontal axis "t" indicates the frame number every 30 minutes in a day as described above, ranging from 0 to 48 frames. Further, the vertical axis indicates the value (kW) of the power consumption X_ECEL (t, s) of the water electrolysis device 13, which is the same as the hydrogen production electric power value on the vertical axis in FIG. 2. Here, "s" is the scenario number, FIG. 13 illustrates Scenario 1, FIG. 14 illustrates Scenario 2, and FIG. 15 illustrates Scenario 3, respectively. The frame number "t" is referred to as the time t in some cases below.

As explained with reference to FIG. 2, regarding the balancing power to be targeted, one commodity has 6 frames. Therefore, Y_DR (t, s), which is the 0/1 variable for whether or not to receive the balancing power, and X_DR_VOL (t, s), which is the balancing power contract amount, are calculated under the constraint that makes them match regardless of the scenario in one commodity in a row of 6 frames.

As a result of the calculation, the time period targeted for the balancing power is for 6 frames from the frame number 18 to the frame number 23 and for 6 frames from the frame number 30 to the frame number 35.

For these two commodities, regarding Y_DR (t, s), 1 is selected for Y_DR (18, s) to Y_DR (23, s) and for Y_DR (30, s) to Y_DR (35, s) (s = 1 to 3), indicating that the balancing power is accepted in the two commodities.

The amount of balancing power to be accepted is X_DR_VOL (18, s) and X_DR_VOL (30, s) in the two commodities respectively.

The three scenarios differ only in the balancing power ratio R, which is, specifically the constant named C_DR_PROP (t, s). That is, Scenario 1 (s = 1) illustrated in FIG. 13 illustrates the case of the balancing power ratio R being 0, Scenario 2 (s = 2) illustrated in FIG. 14 illustrates the case of the balancing power ratio R being 0.5, and Scenario 3 (s = 3) illustrated in FIG. 15 illustrates the case of the balancing power ratio R being 1.0.

Therefore, Scenario 1 is the baseline, and Scenario 2 and Scenario 3 illustrate the case of responding to the request for balancing power.

In Scenario 2 illustrated in FIG. 14, there is provided, to the electric power system 1 as the balancing power, the value obtained by reducing 50% of X_DR_VOL (18, s) and 50% of X DR VOL (30, s) from the baseline in the two commodity regions.

Similarly, in Scenario 3 illustrated in FIG. 15, there is provided, to the electric power system 1 as the balancing power, the value obtained by reducing 100% of X_DR_VOL (18, s) and 100% of X_DR_VOL (30, s) from the baseline in the two commodity regions.

As illustrated in FIG. 14 and FIG. 15, in the time regions following the respective two commodity regions, that is, the time regions from 24 frames to 29 frames and from 36 frames to 41 frames, the amount of electric power for hydrogen production reduced by the balancing power in the time region immediately before each of the above time regions is added to the baseline. This is a result of the constraint conditions on the hydrogen production to ensure the required amount of hydrogen production.

As explained above, according to the operation plan planning device 100 and the operation plan planning method according to this embodiment, it is possible to plan an operation plan based on the past unit price of balancing power or the ease of occurrence of the actuation ratio of the balancing power, and specifically, it becomes clear which time commodity should be traded and how much trading amount should be set at that time. Further, in such a case, it is possible to reveal the operation plan that achieves a minimum cost and to reduce the unit price of hydrogen production.

[Second embodiment]

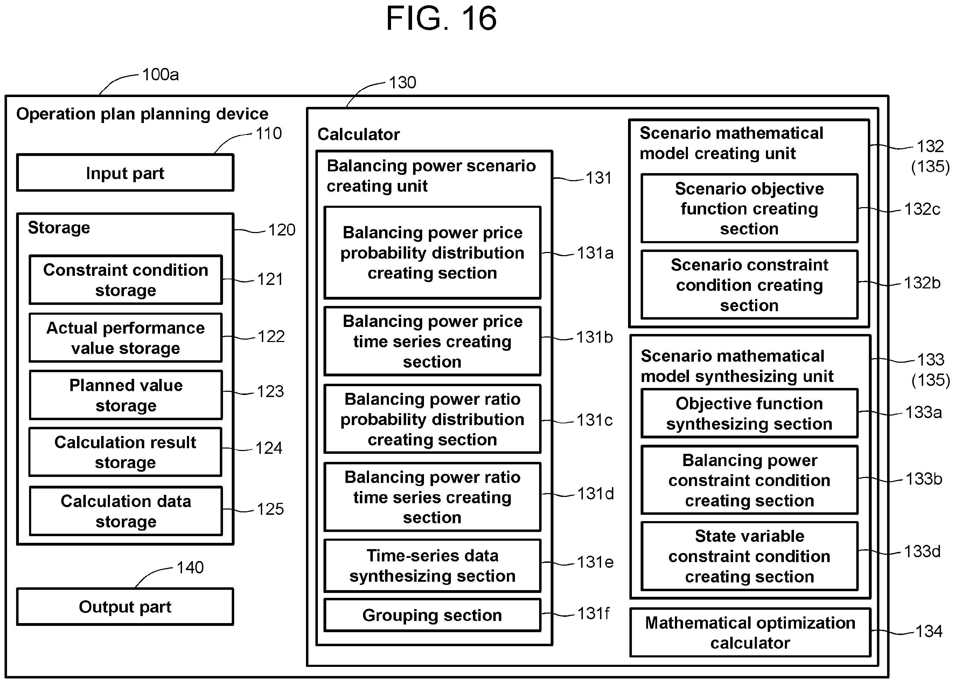

FIG. 16 is a block diagram illustrating a configuration of an operation plan planning device 100a according to a second embodiment.

This embodiment is a modification of the first embodiment, and the facility specifications of the water electrolysis device 13 and the hydrogen storage facility 14 are also within the scope of mathematical optimization.

An operation plan planning device 100a in this embodiment includes a scenario objective function creating section 132c and a state variable constraint condition creating section 133d in place of the scenario objective function creating section 132a and the state variable constraint condition creating section 133c in the operation plan planning device 100 in the first embodiment. Only the parts that differ from the first embodiment are explained below.

As the specifications of the hydrogen production plant 10, the unit price per kW of the maximum input electric power of the water electrolysis device 13, the hydrogen production efficiency, and the capacity unit price of the tank capacity of the hydrogen storage facility 14 are added. That is, the unit price per kW of the renewable energy generator 11, the kW of the storage battery 12, and the unit price per kWh are input to the input part 110. The value normalized by the number of years of depreciation is used for the facility unit price. For example, in the case of the facility to be depreciated in 10 years, if the facility unit price is q yen per kW, (q•T/10 years) is used as the value when the facility, which is to be operated for 10 years, is operated for T hours.

The constants, variables, and constraint conditions set by the scenario objective function creating section 132c and the state variable constraint condition creating section 133d are described below.

(Constants)

T: a set of calculation target times t
D: a set of calculation target days
a: a constant for converting kW to 30 minutes kWh
C_ELCOST (t, s): a purchased electric power cost
C_H2OUT (d, s): an amount of shipped hydrogen
C_ECGAS_EF: EC efficiency ($Nm^3$/kWh)

C_ECEL_LL: a lower limit electric power (kW) of the water electrolysis device 13
C_H2ST_LL: a storage lower limit capacity of hydrogen storage facility ($Nm^3$)
C_EC_UPRICE: a kW unit price of water electrolysis device (yen/kW), where a depreciation period is considered
C_H2ST_UPRICE: a hydrogen storage facility capacity unit price (yen/$Nm^3$), where a depreciation period is considered

(Optimization variables (where the lower limit is 0 and the upper limit is $\infty$))

X_ECEL_UL: a water electrolysis device upper limit electric power (kW)
X_H2ST_UL: a storage upper limit capacity of hydrogen storage facility ($Nm^3$)
X_ECEL (t, s): an EC electric power (kW)
X_ECH2 (t, s): an EC hydrogen produced amount ($Nm^3$)
X_H2ST (t, s): a storage amount of hydrogen storage facility ($Nm^3$)
X_H2OUT (t, s): an amount of shipped hydrogen ($Nm^3$)
X_H2OUT_DCUMSUM (t, s): a cumulative hydrogen shipped amount on the day ($Nm^3$), which is used when synthesizing the scenario.

(Objective function)

An objective function OBJ (s) created by the scenario objective function creating section 132a according to this embodiment is expressed in the following equation (13).
Min OBJ (s)

$$
\begin{aligned}
OBJ(s) = \sum_{t \in T} [ & X\_ECEL(t, s) \times C\_ELCOST(t, s) \\
& - X\_DR\_VOL(t, s) \times C\_DR\_PRICE(t, s) \\
& + C\_EC\_UPRICE \times X\_ECEL\_UL \\
& + C\_H2ST\_UPRICE \times X\_H2ST\_UL ]
\end{aligned}
$$

$$...(13)$$

In the summation symbol on the right side of the equation (13), the first term is the purchase price of electric power from the electric power system 1, the second term is the income by the balancing power, the third term is the facility cost of the water electrolysis device 13, and the fourth term is the facility cost of the hydrogen storage facility 14.

(Constraint conditions)

The constraint condition equation and expressions are described below. The constraint conditions are created for t belonging to the time set T.
The relationship between the power consumption of the water electrolysis device and the amount of produced hydrogen is expressed in the following equation and expressions (14) to (16).

$$X\_ECH2 (t, s) = X\_ECEL (t, s) \times C\_ECGASEF \times a$$

$$...(14)$$

$$X\_ECEL (t, s) \geq C\_ECEL\_LL \qquad ...(15)$$

$$X\_ECEL (t, s) \leq X\_ECEL\_UL \qquad ...(16)$$

The relationship of the balance of the hydrogen storage facility is expressed in the following equation and expressions (17) to (19).

$$X\_H2ST\,(t,\,s) = X\_H2TANK\,(t\text{-}1,\,s) + X\_ECH2\,(t,\,s) + X\_H2OUT\,(t,\,s)$$

$$...(17)$$

$$X\_H2ST\,(t,\,s) \geq C\_H2ST\_LL \qquad\qquad ...(18)$$

$$X\_H2ST\,(t,\,s) \leq X\_H2ST\_UL \qquad\qquad ...(19)$$

The constraint on the amount of shipped hydrogen from the hydrogen storage facility is expressed in the following expression (20).

$$\sum_{t \in d} X\_H2OUT(t,\,s) \geqq C\_H2OUT(d,\,s)$$

$$...(20)$$

Under the above conditions, the mathematical optimization calculator134 executes the optimization calculation, thereby making it possible to minimize overall costs including the scale of the facilities of the water electrolysis device 13 and the hydrogen storage facility 14 with the balancing power.

As above, according to the explained embodiments, it is possible to provide the operation plan planning device and the operation plan planning method for a hydrogen production plant in the case where there are constraints on the amount of produced hydrogen or hydrogen storage capacity and uncertain factors such as a command value of the balancing power are included.

[Other embodiments]

While the embodiments of the present invention have been described above, the embodiments have been presented by way of example only, and are not intended to limit the scope of the inventions. Further, the characteristics of the respective embodiments may also be combined. Further, the embodiments can be embodied in a variety of other forms, and various omissions, substitutions and changes may be made without departing from the spirit of the inventions. The accompanying claims and their equivalents are intended to cover such forms or modifications as would fall within the scope and spirit of the inventions.

EXPLANATION OF REFERENCE NUMERALS

1...electric power system, 1a...transaction wattmeter, 10...hydrogen production plant, 11... renewable energy generator, 12... storage battery, 13...water electrolysis device, 14...hydrogen storage facility, 15...controller, 16...in-plant bus, 100...operation plan planning device, 110...input part, 120...storage, 121...constraint condition storage, 122... actual performance value storage, 123... planned value storage, 124... calculation result storage, 125...calculation data storage, 130...calculator, 131...balancing power scenario creating unit, 131a...balancing power price probability distribution creating section, 131b...balancing power price time series creating section, 131c...balancing power ratio probability distribution creating section, 131d...balancing power ratio time series creating section, 131e...time-series data synthesizing section, 131f...grouping section, 132...scenario mathematical model creating unit, 132a... scenario objective function creating section, 132b...scenario constraint condition creating section, 132c...scenario objective function creating section, 133...scenario mathematical model synthesizing unit, 133a...objective function synthesizing section, 133b...balancing power constraint condition creating section, 133c, 133d...state variable constraint condition creating section, 134...mathematical optimization calculator, 135...calculation condition setting unit, 140...output part

**Claims**

1. An operation plan planning device (100) that is connected to an electric power system (1) and plans an operation plan for responding to a request for a balancing power from the electric power system (1) in a hydrogen production plant (10) that includes a renewable energy generator (11), a water electrolysis device (13), and a hydrogen storage facility (14), the device (100) comprising:

   an input part (110) to read a constraint condition and an actual performance value;
   a storage (120) to store the constraint condition and the actual performance value that are read by the input part (110);
   a calculator (130) that includes: a balancing power scenario creating unit (131) to create a time series of a balancing power price and a time series of a balancing power ratio, and to create a balancing power scenario by synthesizing the time series of the balancing power price and the time series of the balancing power ratio; a mathematical optimization calculator (134) to perform an optimization calculation of the balancing power on the balancing power scenario; and a calculation condition setting unit (135) to set a calculation condition for the optimization calculation; and
   an output part (140) to output a calculation result in the calculator (130) to the hydrogen production plant (10).

2. The operation plan planning device (100) according to claim 1, wherein
   the balancing power scenario creating unit (131) includes:

   a balancing power price probability distribution creating section (131a) to create a balancing power price probability distribution being a probability distribution of the balancing power price;
   a balancing power price time series creating section (131b) to create, based on the balancing power price probability distribution, a balancing power price time series being a time series of the balancing power price;
   a balancing power ratio probability distribution creating section (131c) to create a balancing power ratio probability distribution being a probability distribution of the balancing power ratio; and
   a balancing power ratio time series creating section (131d) to create, based on the balancing power ratio probability distribution, a balancing power ratio time series being a time series of the balancing power ratio.

3. The operation plan planning device (100) according to claim 1, wherein creation of the balancing power scenario by the balancing power scenario creating unit (131) is performed based on specifications and operating conditions of the hydrogen production plant (10), a transaction history of the balancing power, and the request for the balancing power.

4. The operation plan planning device (100) according to claim 1, wherein
   in creation of the balancing power scenario by the balancing power scenario creating unit (131), cases where the balancing power ratio is 0% and the balancing power ratio is 100% are included in the balancing power scenario.

5. The operation plan planning device (100) according to claim 1, wherein the balancing power scenario has a plurality of groups according to a balancing power contract price.

6. The operation plan planning device (100) according to claim 1, wherein

   the balancing power scenario creating unit (131) creates a plurality of the balancing power scenarios, and
   the calculator (130) further includes a scenario mathematical model synthesizing unit (133) to create an objective function in which expected values of objective functions of respective mathematical models of a plurality of the balancing power scenarios are used to be synthesized.

7. The operation plan planning device (100) according to claim 6, wherein the scenario mathematical model synthesizing unit (133) has a constraint that makes state variables of the hydrogen production plant (10) match at a time before a contract time of the balancing power in each of the balancing power scenarios.

8. The operation plan planning device (100) according to claim 1, wherein the renewable energy generator (11) includes at least one of a storage battery (12), a fuel cell, a solar power generator, and a wind power generator.

9. An operation plan planning method that is connected to an electric power system (1) and plans an operation plan for responding to a request for a balancing power from the electric power system (1) in a hydrogen production plant (10) that includes a renewable energy generator (11), a water electrolysis device (13), and a hydrogen storage facility (14), the method comprising:

creating balancing power scenarios for time-series data on a balancing power price and a balancing power ratio;

deriving a scenario mathematical model by creating mathematical models of the balancing power scenarios and synthesizing the mathematical models;

setting an objective function and a constraint condition on the scenario mathematical model; and

optimizing the scenario mathematical model under the constraint condition, wherein

when creating the balancing power scenario, a probability distribution of the balancing power price and a probability distribution of the balancing power ratio are used.

FIG. 1

# FIG. 2

EP 4 303 786 A1

# FIG. 3

**Operation plan planning device** ～100

**Input part** ～110

**Storage** ～120
- **Constraint condition storage** ～121
- **Actual performance value storage** ～122
- **Planned value storage** ～123
- **Calculation result storage** ～124
- **Calculation data storage** ～125

**Output part** ～140

**Calculator** ～130

**Balancing power scenario creating unit** ～131
- **Balancing power price probability distribution creating section** ～131a
- **Balancing power price time series creating section** ～131b
- **Balancing power ratio probability distribution creating section** ～131c
- **Balancing power ratio time series creating section** ～131d
- **Time-series data synthesizing section** ～131e
- **Grouping section** ～131f

**Scenario mathematical model creating unit** ～132 (135)
- **Scenario objective function creating section** ～132a
- **Scenario constraint condition creating section** ～132b

**Scenario mathematical model synthesizing unit** ～133 (135)
- **Objective function synthesizing section** ～133a
- **Balancing power constraint condition creating section** ～133b
- **State variable constraint condition creating section** ～133c

**Mathematical optimization calculator** ～134

EP 4 303 786 A1

# FIG. 4

INPUT

**S10** — Balancing power scenario creating

**S11** — balancing power price probability distribution creating

**S12** — Contract unit price time-series data creating

**S13** — Balancing power ratio probability distribution creating

**S14** — Balancing power ratio time-series data creating

**S15** — Time-series data synthesizing

**S16** — Grouping

**S20** — Scenario mathematical model creating

**S21** — Creating scenario objective function

**S22** — Creating constraint condition

**S30** — Scenario mathematical model synthesizing step

**S31** — Objective function synthesizing

**S32** — Creating balancing power constraint condition

**S33** — Creating state variable constraint condition

**S40** — Mathematical optimization calculation

OUTPUT

EP 4 303 786 A1

# FIG. 5

4Yen/kW  ✕—✕—✕—✕—✕—✕—✕—✕—✕—✕—✕—✕  A

t

EP 4 303 786 A1

# FIG. 6

100%  ✕—✕—✕—✕—✕—✕—✕—✕—✕—✕—✕—✕  a

50%  ✕—✕—✕—✕—✕—✕—✕—✕—✕—✕—✕—✕  b

0%  ✕—✕—✕—✕—✕—✕—✕—✕—✕—✕—✕—✕  c

t

# FIG. 7

| Scenario number | Contract price time series | Balancing power ratio time series | Probabilities | Group |
|:---:|:---:|:---:|:---:|:---:|
| 1 | A | a | 0.1 | 1 |
| 2 | A | b | 0.8 | 1 |
| 3 | A | c | 0.1 | 1 |

EP 4 303 786 A1

# FIG. 8

(Yen/kW)

C
B

# FIG. 9

# FIG. 10

# FIG. 11

Balancing power ratio time-series
in response to the contract unit price time-series data C

## FIG. 12

| Scenario number | Contract price time series | Balancing power ratio time series | Probabilities | Group |
|---|---|---|---|---|
| 1 | B | d | 0.05 | 1 |
| 2 | B | e | 0.4 | 1 |
| 3 | B | f | 0.05 | 1 |
| 4 | C | g | 0.05 | 2 |
| 5 | C | h | 0.4 | 2 |
| 6 | C | i | 0.05 | 2 |

# FIG. 13

$Y\_DR(t, 1) = 0$    0 1    1 0    0 1    1 0    0

$X\_ECEL(t, 1)$

$t = 0$   6   12   18   24   30   36   42   48

$t$

EP 4 303 786 A1

# FIG. 14

$Y\_DR(t, 1) = 0$ ← → 0 1 ← → 1 0 ← → 0 1 ← → 1 0 ← → 0

$X\_ECEL(t, 2)$

$t = 0$   6   12   18   24   30   36   42   48

$X\_DR\_VOL(18, 1) \times 50\%$   $X\_DR\_VOL(30, 1) \times 50\%$

$t$

EP 4 303 786 A1

EP 4 303 786 A1

# FIG. 15

$Y\_DR(t, \mathbf{1}) = \mathbf{0}$

0 1    1 0    0 1    1 0    0

$X\_ECEL(t, 3)$

$t = 0$    6    12    18    24    30    36    42    48

$t$

$X\_DR\_VOL(18, 1)$    $X\_DR\_VOL(30, 1)$

## FIG. 16

**Operation plan planning device** — 100a

**Input part** — 110

**Storage** — 120
- Constraint condition storage — 121
- Actual performance value storage — 122
- Planned value storage — 123
- Calculation result storage — 124
- Calculation data storage — 125

**Output part** — 140

**Calculator** — 130

**Balancing power scenario creating unit** — 131
- Balancing power price probability distribution creating section — 131a
- Balancing power price time series creating section — 131b
- Balancing power ratio probability distribution creating section — 131c
- Balancing power ratio time series creating section — 131d
- Time-series data synthesizing section — 131e
- Grouping section — 131f

**Scenario mathematical model creating unit** — 132 (135)
- Scenario objective function creating section — 132c
- Scenario constraint condition creating section — 132b

**Scenario mathematical model synthesizing unit** — 133 (135)
- Objective function synthesizing section — 133a
- Balancing power constraint condition creating section — 133b
- State variable constraint condition creating section — 133d

**Mathematical optimization calculator** — 134

EP 4 303 786 A1

Europäisches
Patentamt

European
Patent Office

Office européen
des brevets

# EUROPEAN SEARCH REPORT

Application Number

EP 23 18 3285

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUN TENG ET AL: "A multi energy storage system model based on electricity heat and hydrogen coordinated optimization for power grid flexibility", CSEE JOURNAL OF POWER AND ENERGY SYSTEMS, 1 June 2019 (2019-06-01), XP093096741, ISSN: 2096-0042, DOI: 10.17775/CSEEJPES.2019.00190 Retrieved from the Internet: URL:https://ieeexplore.ieee.org/ielx7/7054730/8746067/08735429.pdf?tp=&arnumber=8735429&isnumber=8746067&ref=aHR0cHM6Ly9pZWVleHBsb3JlLmllZWUub3JnL2Fic3RyYWN0L2RvY3VtZW50Lzg3MzU0Mjk=> * cf. sections I, II.A, III.A-C, IV.B and IV.C. * | 1-9 | INV. G06Q10/04 |
| A | M. KORPAS ET AL: "Operation Planning of Hydrogen Storage Connected to Wind Power Operating in a Power Market", IEEE TRANSACTIONS ON ENERGY CONVERSION., vol. 21, no. 3, 1 September 2006 (2006-09-01), pages 742-749, XP055457508, US ISSN: 0885-8969, DOI: 10.1109/TEC.2006.878245 * cf. section II (Approach) * | 1-9 | |
| | | | TECHNICAL FIELDS SEARCHED (IPC) |
| | | | G06Q H02J |

The present search report has been drawn up for all claims

| Place of search | Date of completion of the search | Examiner |
|---|---|---|
| Munich | 31 October 2023 | Reino, Bernardo |

EPO FORM 1503 03.82 (P04C01)